# EUROPEAN PATENT APPLICATION

(11) **EP 1 675 108 A1**
(43) Date of publication of application: **28.06.2006**
(21) Application number: 04787920.0
(22) Date of filing: 21.09.2004
(51) Int. Cl.: G11B 7/0065, G11B 7/135, G03H 1/04, G03H 1/26

(54) **INFORMATION RECORDING DEVICE AND INFORMATION RECORDING/REPRODUCING DEVICE**

(30) Priority: 22.09.2003 JP 2003330575
(71) Applicant: Pioneer Corporation, Tokyo 153-8654 (JP)
(72) Inventor: KURODA, Kazuo c/o Pioneer Corporation, Tokorozawa-shi, Saitama;3598522 (JP)
(74) Representative: Viering, Hans-Martin
(86) International application number: PCT/JP2004/013737
(87) International publication number: WO 2005/029476

(57) **Abstract**

There is provided an information recording device for recording the recording information on a recording medium having a recording surface where recording can be performed optically. The information recording device includes a laser light source and a conversion optical system for converting the laser beam emitted from the laser light source into a planar laser beam having an optical flux cross section extending linearly. The information recording device further includes: one-dimensional space modulation means (3) for subjecting the planar laser beam to one-dimensional space modulation according to the recording information; and a recording optical system for applying the planar laser beam subjected to the spatial modulation, as a signal light (Ls) to the recording surface while applying a reference light (Lr) to the recording surface.

## Description

### Technical Field

The present invention relates to an information recording apparatus and an information recording / reproducing apparatus using a hologram.

### Background Art

In this type of apparatus using a hologram, upon the recording thereof, the record information is recorded as an interference pattern or fringe by performing two-dimensional spatial modulation of signal light, which is a laser beam or the like, and then irradiating a same point on the recording surface of a recording medium with the signal light, together with reference light. Upon the reproduction thereof, the record information is reproduced by irradiating the recording point with the reference light, and detecting transmitted light and reflected light, caused by the irradiation of the reference light, as signal light modulated in the same manner as the signal light in the recording. For example, a patent document 1 or a patent document 2 discloses a technology of a hologram recording / reproducing apparatus in which signal light that is a thick columnar or prism-like laser beam is irradiated to an entire two-dimensional spatial light modulator (or two-dimensional spatial modulator).

Moreover, there is also proposed a hologram recording / reproducing apparatus using a one-dimensional spatial light modulator (or one-dimensional spatial modulator). Patent document 1: Japanese Patent Application Laid Open NO. Hei 10-91056
Patent document 2: Japanese Patent Publication NO. 3403068

### Disclosure of Invention

### Object to be Solved by the Invention

However, in the hologram recording / reproducing apparatus disclosed in the above-mentioned patent document 1 or the like, the signal light is a thick prism-like laser beam, so that there is such a technical problem that the entire recording / reproducing apparatus including an optical system cannot be miniaturized or thinned.

On the other hand, if the two-dimensional spatial light modulator is miniaturized, a diffraction grating becomes narrow, to thereby increase the diffraction angle of higher-order light, so that there is no point to miniaturize the two-dimensional spatial light modulator. Namely, there is also such a technical problem that the two-dimensional spatial light modulator is essentially not suited for the miniaturization.

Moreover, even in the case of the recording / reproducing apparatus using the one-dimensional spatial light modulator, it is necessary to provide an optical system in which a disc-shaped recording medium, such as an optical disc, is irradiated with the signal light and the reference light, substantially in a normal direction with respect to the recording surface. Therefore, it is necessary to ensure the optical paths of the signal light and the reference light and an accommodation space for the information recording medium, at least within a housing, and there is such a technical problem that even in the case of the information recording / reproducing apparatus, it is essentially not suited for the miniaturization or the thinning.

In order to solve the above-mentioned conventional problems, it is therefore an object of the present invention to provide an information recording apparatus and an information recording / reproducing apparatus of a hologram type which can be miniaturized or thinned.

### Means for Solving the Object

In order to solve the above-mentioned object, an information recording apparatus according to claim 1 of the present invention is an information recording apparatus for recording record information onto a recording medium having an optically recordable recording surface, provided with: a laser light source; a converting optical system for converting a laser beam emitted from the laser light source to a plate-like laser beam whose cross section extends linearly and for emitting the laser beam such that a direction extending linearly is along the recording surface; a one-dimensional spatial modulating device for performing one-dimensional spatial modulation in the direction extending linearly with respect to the plate-like laser beam, on the basis of the record information; a recording optical system for recording the record information onto the recording medium, by irradiating the recording surface with reference light based on the laser beam emitted from the laser light source while irradiating the recording surface with the spatial modulated plate-like laser beam as signal light; and a displacing device for displacing the recoding medium relative to the recording optical system such that irradiation positions of the signal light and the reference light are relatively displaced on the recording surface.

In order to solve the above-mentioned object, an information recording apparatus according to claim 10 of the present invention is an information recording / reproducing apparatus provided with: the information recording apparatus according to claim 1; a controlling device for making the one-dimensional spatial modulating device function as a shielding device for shielding the laser beam emitted from the laser light source; and a reproducing device for detecting interference light produced by transmission, diffraction, or reflection on the recording medium, caused by the reference light irradiated to the recording surface through the recording optical system, and reproducing the record information on the basis of the detected interference light.

These effects and other advantages of the present invention become more apparent from the following embodiments.

### Best Mode for Carrying Out the Invention

The information recording apparatus and the information recording /reproducing apparatus according to embodiments of the present invention will be explained.

### (Embodiment of Information Recording Apparatus)

The embodiment of the information recording apparatus of the present invention is an information recording apparatus for recording record information onto a recording medium having an optically recordable recording surface, provided with: a laser light source; a converting optical system for converting a laser beam emitted from the laser light source to a plate-like laser beam whose cross section extends linearly and for emitting the laser beam such that a direction extending linearly is along the recording surface; a one-dimensional spatial modulating device for performing one-dimensional spatial modulation in the direction extending linearly with respect to the plate-like laser beam, on the basis of the record information; a recording optical system for recording the record information onto the recording medium, by irradiating the recording surface with reference light based on the laser beam emitted from the laser light source while irradiating the recording surface with the spatial modulated plate-like laser beam as signal light; and a displacing device for displacing the recoding medium relative to the recording optical system such that irradiation positions of the signal light and the reference light are relatively displaced on the recording surface.

According to the embodiment of the information recording apparatus of the present invention, at first, the laser beam is emitted from the laser light source, such as a semiconductor laser and a gas laser, wherein the cross section of light flux spreads two-dimensionally, such as circular and oval, or the cross section is squashed in a particular direction, such as longitudinal and linear (e.g.. straight line). The emitted laser beam is converted to the plate-like laser beam by the converting optical system including an expander or the like, and then inputted to the one-dimensional spatial modulating device. Then, on the one-dimensional spatial modulating device, one-dimensional spatial modulation is performed to the plate-like laser beam, in the direction thereof extending linearly, on the basis of the record information to be recorded. In other words, the spatial modulation is performed for each of the light flux portions which are aligned on the cross section of the light flux, which extends linearly, of the plate-like laser beam. Then, the recording surface is irradiated with the spatial modulated plate-like laser beam, as the signal light, by the recording optical system including an objective lens or the like. Together with this, the recording surface is irradiated by the recording optical system with the reference light based on the laser beam emitted from the laser light source, such as the reference light split from the laser beam and the reference light included in the plate-like laser beam, in the previous step of converting the laser beam to the plate-like leaser beam, for example.

While such a laser beam is modulated, the recording medium is relatively displaced by the displacing device, continuously, intermittently, or discontinuously. Namely, the recording medium is rotationally displaced or parallel-displaced, relative to the recording optical system or the like. In place of or in addition to this, the recording optical system or another recording system is displaced relative to the recording medium. Therefore, along with the displacement, it is possible to sequentially record the record information, as one portion of the interference pattern of the signal light and the reference light, into a desired position on the recording surface.

Particularly in the embodiment, after converted to the plate-like laser beam, the laser beam is spatial modulated, so that it is possible to perform the one-dimensional spatial modulation by using the one-dimensional spatial modulating device, in stead of the two-dimensional spatial modulating device which is generally used in the hologram recording. Moreover, the converting optical system emits the laser beam emitted from the laser light source such that the direction of the plate-like laser beam extending linearly is along the recording surface. For example, the laser beam is converted to the plate-like laser beam such that the flat surface of the plate-like laser beam is parallel to or substantially parallel to the recording surface. In this case, the laser light source and the converting optical system may be disposed such that even the optical path from the laser light source to the converting optical system is also is parallel to or substantially parallel to the recording surface, as well. In addition, the one-dimensional spatial modulating device and the recording optical system may be disposed such that even the optical path from the one-dimensional spatial modulating device to the recording optical system is also is parallel to or substantially parallel to the recording surface, as well. Therefore, it is possible to contain a space occupied by the optical path of the plate-like laser beam and a space occupied by the one-dimensional spatial modulating device for spatial-modulating the plate-like laser beam, in a space which spreads relatively thinly along the recording surface.

As a result, it is possible to dispose the laser light source, the converting optical system, the one-dimensional spatial modulating device, and the recording optical system of the present invention, in a relatively narrow space surrounding the recording medium which spreads flatly, such as an optical disc which can be hardly miniaturized or cannot be miniaturized, while the record information is modulated by using the one-dimensional spatial modulation, on a hologram recorder and a player or the like, for example. As result of this, it is possible to miniaturize and thin the entire information recording apparatus which include the space for containing the recording medium.

In one aspect of the embodiment of the information recording apparatus of the present invention, the recording optical system includes: a splitting optical system for splitting the laser beam emitted from the laser light source into the signal light and the reference light in a previous step of the converting optical system; and a combining optical system for combining the one-dimensional spatial modulated signal light and the reference light to a same optical path, in a subsequent step of the one-dimensional spatial modulating device.

According to this aspect, the laser beam emitted from the laser light source is split into the signal light and the reference light, by the splitting optical system, such as a beam splitter and a half mirror. After that, the signal light is modulated by the one-dimensional spatial modulating device as the plate-like laser beam, through the converting optical system. On the other hand, the reference light is not modulated without therethrough. Then, the one-dimensional spatial modulated signal light and the reference light are combined to the same optical path by the combining optical system, such as a coupling prism, and then, irradiated to the same recording position on the recording surface by the recording optical system. Therefore, it is possible to record the record information on the recording surface, by the interference of the one-dimensional spatial modulated signal light and the reference light.

Incidentally, it is also possible to dispose the splitting optical system between the converting optical system and the one-dimensional spatial modulating device.

Alternatively, in another aspect of the embodiment of the information recording apparatus of the present invention, the recording optical system further comprises a splitting optical system for splitting the laser beam emitted from the laser light source into the signal light and the reference light in a previous step of the converting optical system, and the one-dimensional spatial modulated signal light and the reference light are combined to a same optical path and irradiated to the recording surface.

According to this aspect, the laser beam emitted from the laser light source is split into the signal light and the reference light, by the splitting optical system, such as a beam splitter and a half mirror. After that, the signal light is modulated by the one-dimensional spatial modulating device as the plate-like laser beam, through the converting optical system. On the other hand, the reference light is not modulated without therethrough. Then, the one-dimensional spatial modulated signal light and the reference light are combined to the same optical path and irradiated onto the recording surface, by the recording optical system including a mirror, an object lens or the like, for example. Therefore, it is possible to record the record information on the recording surface, by the interference of the one-dimensional spatial modulated signal light and the reference light.

Incidentally, it is also possible to dispose the splitting optical system between the converting optical system and the one-dimensional spatial modulating device.

In an aspect related to the splitting optical system, it may be constructed such that the splitting optical system splits the reference light such that the optical path of the reference light and the plate-like laser beam are located side-by-side as viewed from the recording surface.

By such construction, it is possible to contain not only the space occupied by the optical path of the plate-like laser beam, but also the space occupied by the optical path of the split reference light, in the space which spreads relatively thinly along the recording surface. Therefore, it is possible to miniaturize and thin the entire information recording apparatus while a hologram optical system for splitting the reference light from signal light is adopted.

Alternatively, in another aspect of the embodiment of the information recording apparatus of the present invention, the reference light is emitted from the laser light source, together with the signal light, and irradiated to the recording surface through the converting optical system, the one-dimensional spatial modulating device, and the recording optical system.

According to this aspect, by virtue of a so-called "self-coupling method", it is possible to record the information on the recording surface, by the interference of the signal light and the reference light included in the same laser beam. More specifically, for example, the reference light corresponds to light which mainly contains a brightness component of the one-dimensional spatial modulated laser beam, and the signal light corresponds to light which mainly contains a phase component of the one-dimensional spatial modulated laser beam. The recording surface is irradiated with the reference light and the signal light, as one combined light.

In another aspect of the embodiment of the information recording apparatus of the present invention, the information recording apparatus is further provided with an irradiation angle changing device capable of relatively changing irradiation angles of the signal light and the reference light with respect to the recording surface.

According to this aspect, by virtue of a so-called "angle multiplexing method", it is possible to record a plurality of record information, by changing an irradiation angle at the same position on the recording surface. Therefore, it is extremely useful in increasing a recording density. Particularly in the case of the angle multiplexing method, it is only necessary to perform the recording with an inclination of the irradiation angle by 1 degree or less, or a tenth of a degree or less. Therefore, even if the plate-like laser beam is inclined to a certain degree from a position parallel to the recording surface because of the inclination of the irradiation angle, the degree of the inclination is minor, and yet it cannot be said that the plate-like laser beam is out of the position along the recording surface. In other words, even if the angle multiplexing is performed, such a unique effect of the embodiment is sufficiently maintained that the information recording apparatus can be miniaturized and thinned, as described above.

Incidentally, in the embodiment, it is possible to adopt not only the angle multiplexing but also various methods related to the hologram recording, such as a "frequency multiplexing method". Moreover, it is also possible to adopt the multiplexing method in which the inclination is performed not in the radial direction but in the normal direction.

In another aspect of the embodiment of the information recording apparatus of the present invention, at least one portion of the laser light source, the converting optical system, the one-dimensional spatial modulating device, and the recording optical system disposed in a same plane located along the recording surface.

According to this aspect, the plane on which at least one portion of the laser light source, the converting optical system, the one-dimensional spatial modulating device, and the recording optical system is disposed is along the recording surface, as in the plate-like laser beam, so that it is possible to contain the constitutional elements in the space which spreads relatively thinly along the recording surface. Therefore, it is possible to miniaturize and thin the entire information recording apparatus.

In another aspect of the embodiment of the information recording apparatus of the present invention, the recording optical system includes a mirror device for changing the one-dimensional spatial modulated plate-like laser beam which travels along the recording surface, to travel in a direction crossing the recording surface.

According to this aspect, the plate-like laser beam which travels along the recording surface is changed by the mirror device included in the recording optical system, to travel in the direction crossing the recording surface. Then, it is irradiated onto the recording surface through another optical element, such as an object lens, for example. Therefore, it is possible to prevent the recording optical system from being unnecessarily thicken in the direction crossing the recording surface.

In another aspect of the embodiment of the information recording apparatus of the present invention, at least one of the converting optical system, the one-dimensional spatial modulating device, and the recording optical system includes an optical element in which a cross section crossing a traveling direction of the plate-like laser beam is in a longitudinal shape, extending along the recording surface in accordance with a cross section of light flux, which extends linearly, of the plate-like laser beam.

According to this aspect, various optical elements, such as a cylindrical lens, a spatial light modulator, a mirror, a half mirror, and a prism, included in the converting optical system, the one-dimensional spatial modulating device, and the recording optical system are in a longitudinal shape, extending in accordance with the cross section of light flux extending linearly of the incident plate-like laser beam. Therefore, without using an unnecessarily large optical element, it is possible to miniaturize and thin the entire information recording apparatus, by using the longitudinal shaped optical element which has a flat shape along the recording surface and which can function, necessarily and sufficiently, with respect to the plate-like laser beam.

### (Embodiment of Information Recording / Reproducing Apparatus)

The embodiment of the information recording / reproducing apparatus of the present invention is an information recording / reproducing apparatus provided with: the above-mentioned embodiment of the information recording apparatus of the present invention (including its various aspects); a controlling device for making the one-dimensional spatial modulating device function as a shielding device for shielding the laser beam emitted from the laser light source; and a reproducing device for detecting interference light produced by transmission, diffraction, or reflection on the recording medium, caused by the reference light irradiated to the recording surface through the recording optical system, and reproducing the record information on the basis of the detected interference light.

The embodiment of the information recording / reproducing apparatus of the present invention is provided with the above-mentioned embodiment of the information recording apparatus of the present invention. Thus, it is possible to dispose the laser light source, the converting optical system, the one-dimensional spatial modulating device, and the recording optical system of the present invention, in a relatively narrow space surrounding the recording medium which spreads in a plate-like way, on a hologram recorder and a player or the like, for example, and it is possible to miniaturize and thin the entire information recording / reproducing apparatus including an accommodation space for the recording medium.

These effects and other advantages of the present invention become more apparent from the following embodiments.

As explained above, according to the embodiment of the information recording apparatus of the present invention, the one-dimensional spatial modulation is performed by the one-dimensional spatial modulating device, and the laser beam is converted by the converting optical system to the plate-like laser beam such that the direction thereof extending linearly is along the recording surface. Thus, it is possible to miniaturize and thin the entire information recording apparatus including an accommodation space for the recording medium. Moreover, according to the embodiment of the information recording / reproducing apparatus of the present invention, the laser beam is converted by the converting optical system to the plate-like laser beam such that the direction thereof extending linearly is along the recording surface. Thus, it is possible to miniaturize and thin the entire information recording / reproducing apparatus including an accommodation space for the recording medium.

### Examples

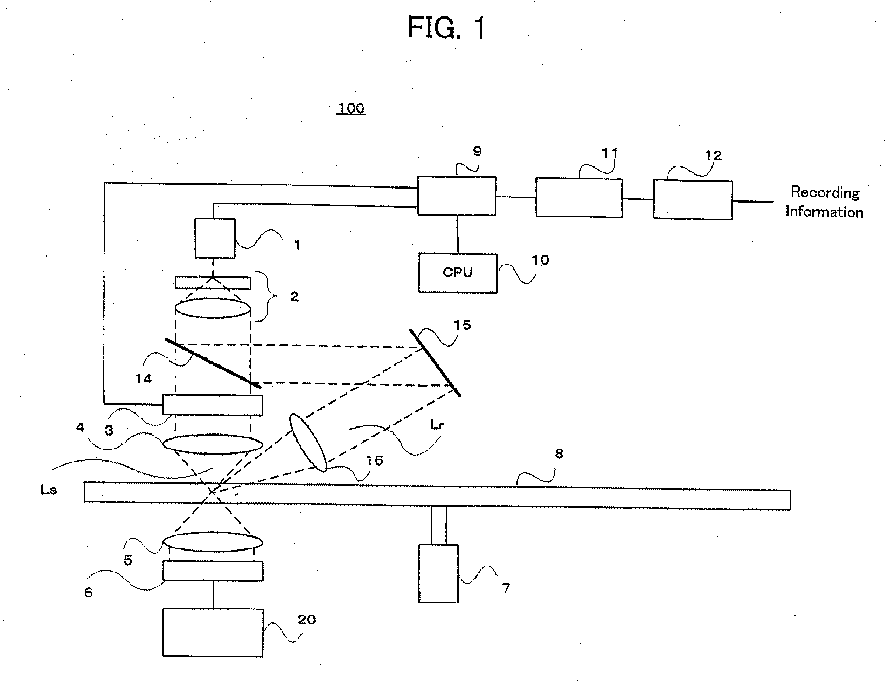

Hereinafter, a basic recording principle and a basic reproduction principle in the examples of the information recording / reproducing apparatus which uses the hologram of the present invention will be discussed, with reference to FIG. 1 to FIG. 4.

At first, with reference to FIG. 1, the basic structure of a hologram disc recording / reproducing apparatus (hereinafter, which is also simply referred to as a "recording / reproducing apparatus") in the examples of the present invention. FIG. 1 is a schematic block diagram showing the structure of the recording / reproducing apparatus in an example of the present invention. As shown in the figure, a recording / reproducing apparatus 100 records information onto a hologram disc 8 (hereinafter, which is also simply referred to as a "disc") and reproduces it. The disc 8 is made by putting or containing a hologram medium, such as photopolymer, between two glass substrates, for example. It is possible to use the same disc as used in the hologram recording in the conventional technology described above. The disc 8 is rotated by a spindle motor 7. Incidentally, the rotation of the spindle motor 7 is controlled in a spindle servo method or the like, performed in the recording / reproduction of a normal optical disc.

The record information inputted from the exterior is once stored or held in a buffer 12, and then, transmitted to a formatter 11. The formatter 11 performs a necessary process, such as addition of an ECC (Error Correction Code), to the record information, generates data following a predetermined recording format, and supplies it to a modulator 9. The modulator 9 performs two types of modulation. One is the modulation of signal light performed by a one-dimensional spatial light modulator 3 described later, and the other is the modulation of laser light emitted from a laser light source 1. Incidentally, they will be discussed again later.

A laser optical system, which produces or generates recording light (signal light and reference light) and irradiating the disc 8 with it, is provided with: the laser light source 1; an expander 2; the one-dimensional spatial light modulator 3; a Fourier transform lens 4; an inverse Fourier transform lens 5; a light receiving element (or photo-detector) 6; a half mirror 14; a reflecting mirror 15; and a condensing lens 16. The disc 8 is disposed between the Fourier transform lens 4 and the inverse Fourier transform lens 5.

The laser beam emitted from the laser light source 1 is expanded by the expander 2 in size or width of the beam, and is split or divided into two series, i.e. the signal light and the reference light, by the half mirror 14. The laser beam transmitted through the half mirror 14 passes through the one-dimensional spatial light modulator 3, by which it is modulated in accordance with a pattern given by the modulator 9, and enters the Fourier transform lens 4. Moreover, the laser beam passes through the Fourier transform lens 4, by which it is irradiated onto the disc 8 as signal light Ls.

The other laser beam, split by the half mirror 14, is reflected by the reflecting mirror 15, and irradiated as reference light Lr onto the recording surface of the disc 8 through the condensing lens 16. On the recording surface of the disc 8, the signal light Ls and the reference light Lr are simultaneously irradiated to the same position on the disc 8. By this, the signal light Ls and the reference light Lr interfere with each other on the disc 8, to thereby produce an interference pattern or fringe, and the interference pattern is recorded as a Fourier image into the hologram medium.

On the other hand, upon the reproduction of the information, the signal light Ls is shielded or blocked so that the disc 8 is not irradiated, and the disc 8 is irradiated with only the reference light Lr which is the same as in the recording. The irradiated reference light Lr is diffracted by the interference pattern recorded on the disc 8, to thereby produce diffracted light. The diffracted light enters the light receiving element 6 through the inverse Fourier transform lens 5, and thus a reproduction signal is obtained. The reproduction signal is supplied to a reproducing processing system 20.

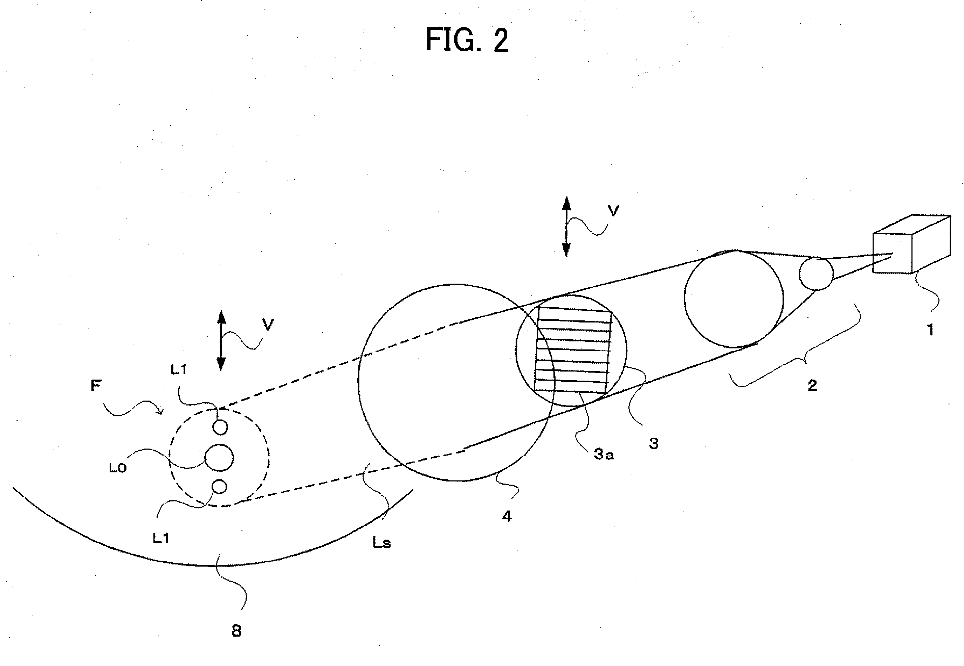

Next, with reference to FIG. 2, an explanation will be given to a situation in which the signal light Ls is emitted or irradiated onto the disc from the recording / reproducing apparatus 100 shown in FIG. 1. FIG. 2 is a conceptual view schematically showing the situation in which the signal light is emitted or irradiated onto the disc from the recording / reproducing apparatus in the example of the present invention. The laser beam emitted from the laser light source 1 is expanded by the expander 2 and is entered to the one-dimensional spatial light modulator 3. The one-dimensional spatial light modulator 3 has a grating structure 3a shown in the figure. In the example of FIG. 2, there is formed the grating structure 3a with continuous gratings in a vertical direction (a direction of an arrow V) in the figure.

The laser light transmitted through the one-dimensional spatial light modulator 3 is irradiated onto the recording surface of the disc 8 by the Fourier transform lens 4. As shown in the figure, on the recording surface of the disc 8, there is formed a Fourier image F, including one 0-order diffracted light L0 and two 1st-order diffracted lights L1. In the example of FIG. 2, the grating structure 3a of the one-dimensional spatial light modulator 3 is formed in the V direction in the figure, so that the two 1st-order diffracted lights L1 are arranged in the V direction and formed on both sides (upper and lower sides) of the 0-order diffracted light L0. Incidentally, a distance between the 0-order diffracted light L0 and the 1st-order diffracted light L1 on the disc 8 is determined from a distance between gratings and from a wavelength of the grating structure 3a of the one-dimensional spatial light modulator 3. The Fourier image F is recorded onto the disc 8 as the interference pattern.

In the present invention, the Fourier image F is recorded onto the disc 8 while the recording medium is relatively displaced relative to the recording optical system. In the example, the recording medium is the disc, so that by the rotation of the disc 8, the Fourier image F formed on the recording surface of the disc 8 is displaced in the tangential direction of the disc 8.

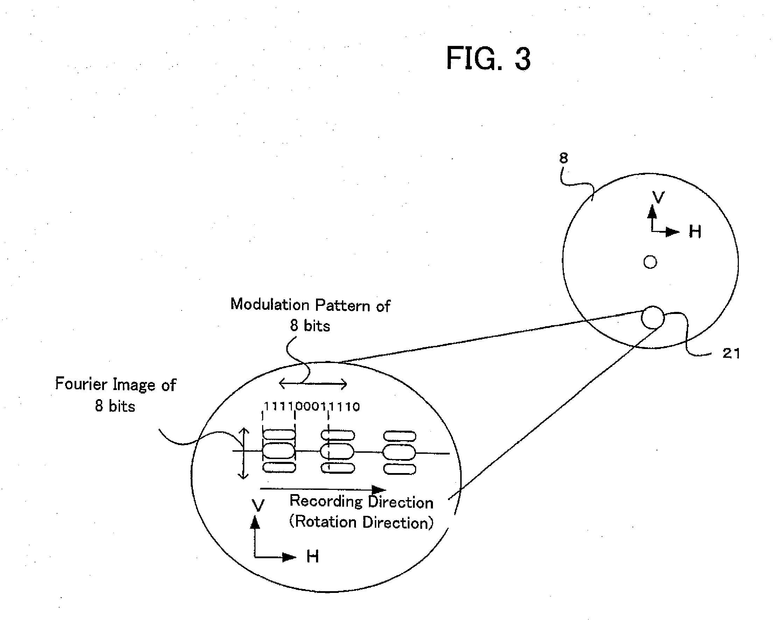

Next, with reference to FIG. 3, one specific example of the Fourier image F formed on the disc is discussed. FIG. 3 is an enlarged view schematically showing one specific example of the Fourier image formed on the disc in the example of the present invention. Incidentally, the example of FIG. 3 is an example of the case where the 8-bit one-dimensional spatial light modulator 3 shown in FIG. 2 is used. A portion 21 on the disc 8 which is irradiated with the recording light is enlarged and shown in a circle 22.

In the condition that the disc 8 stays still, the Fourier image F as shown in FIG. 2 is recorded onto the disc 8. However, the disc is relatively displaced relative to the recording light, so that the Fourier image F which is actually recorded has a horizontally long shape, like it is stretched in the recording direction (in the tangential direction of the disc) (hereinafter, the Fourier image F recorded on the disc 8 is also referred to as a "hologram mark").

The hologram mark shown in FIG. 3 is modulated in both of the two directions of the vertical direction (V direction) and a horizontal direction (H direction). Incidentally, the V direction in FIG. 3 is the radial direction of the disc 8, and corresponds to the V direction shown in FIG. 2, i.e. a direction in which the gratings of the one-dimensional spatial light modulator 3 are formed. Moreover, the H direction in FIG. 3 is the tangential direction of the disc 8.

One of the modulation in the two directions is modulation by the grating structure 3a of the one-dimensional spatial light modulator 3. In this example, the 8-bit one-dimensional spatial light modulator 3 as shown in FIG. 2 is used, and the Fourier image recorded on the disc 8, i.e. the hologram mark, has 8-bit information in the V direction.

In addition to this, in the example, the modulation using a hologram mark length is preformed by controlling whether to irradiate or not the laser beam (i.e. ON / OFF of the laser light source 1) in the recording direction, i.e. in the H direction, in FIG. 3. Incidentally, in place of ON / OFF of the laser light, the amount of light may be controlled between two values. In FIG. 3, the example of the record information obtained by the modulation using the mark length is shown by a numerical column of "1" and "0". In the example of FIG. 3, the hologram mark is formed in the period that the laser light source 1 is ON, and the period corresponds to the record information "1". On the other hand, the hologram mark is not formed in the period that the laser light source 1 is OFF, and the period corresponds to the record information "0".

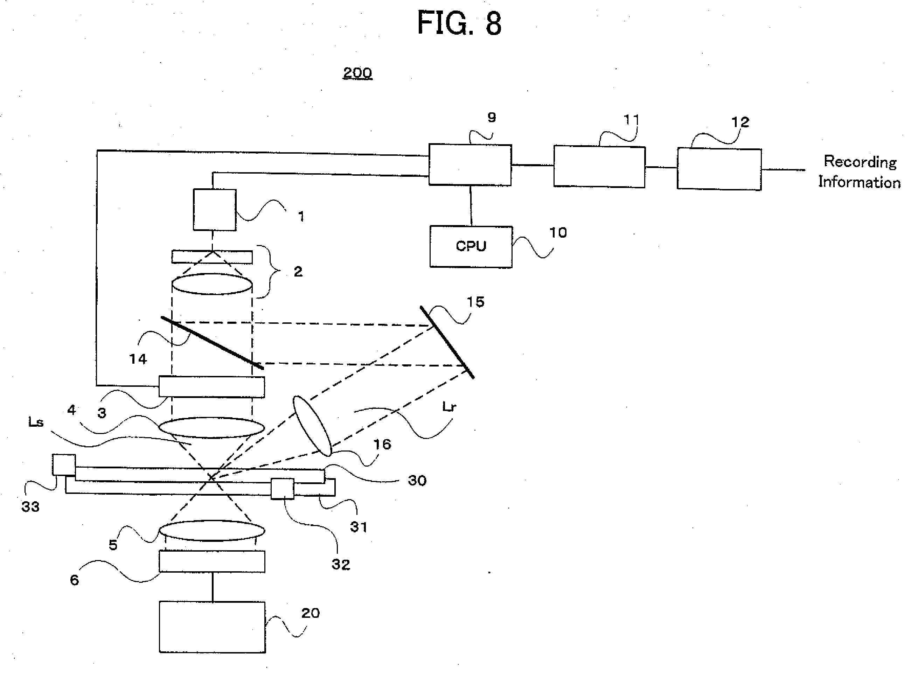

In the example of FIG. 3, 8-bit information is recorded in the V direction by the one-dimensional spatial light modulator, and the modulation using the mark length of the hologram mark is performed even in the H direction by the ON / OFF control of the laser light source. As described above, in the example, the modulation by the one-dimensional spatial light modulator and the modulation by the ON / OFF of the laser light are combined, so that it is possible to record more information.

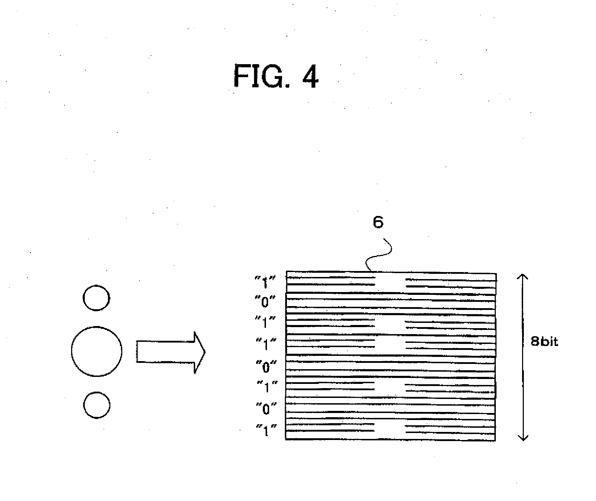

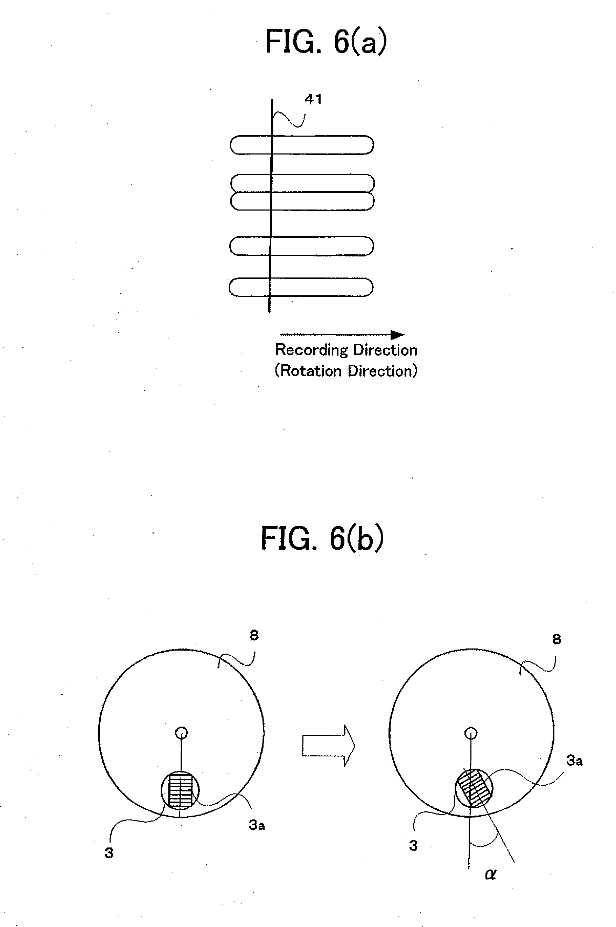

Next, with reference to FIG. 4, the structural example of the light receiving element 6 will be discussed. FIG. 4 is a schematic diagram showing one structural example of the light receiving element or photo-detector in the example of the present invention. Upon reproduction, the disc 8 is irradiated with only the reference light Lr, and the diffracted light produced by the recorded Fourier image is inverse Fourier transformed by the inverse Fourier transform lens 5, to thereby enter it to the light receiving element 6. The example shown in the figure is an 8-bit light receiving element, and as shown in FIG. 6(a), it shows a situation in which the diffracted light corresponding to 8-bit data of "10110101" is received from the top.

Next, with reference to FIGs. 5 to FIG. 7, another example of the information recording apparatus of the present invention will be discussed. FIGs. 5 are schematic diagrams showing one specific example of the hologram mark. FIGs. 6 are plan views schematically showing a scratch or damage in the radial direction of the hologram mark in another example of the present invention and a relative positional relationship between the disc and the one-dimensional spatial light modulator 3. FIG. 7 is a schematic diagram showing a situation in which the signal light is emitted or irradiated onto the disc in the case where a cylindrical lens is used for the expander and the Fourier transform lens, from the recording / reproducing apparatus in another example of the present invention.

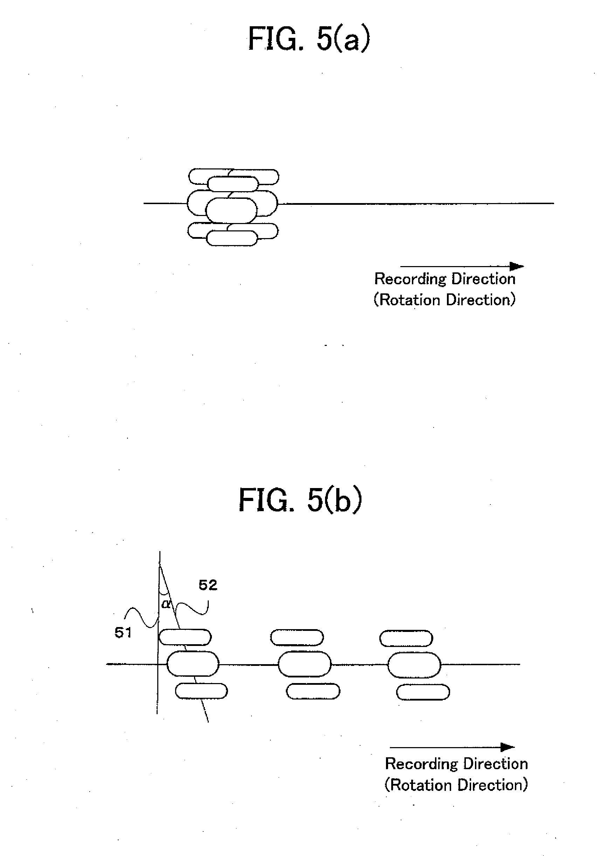

Namely, the hologram recording is performed in the present invention, so that it is possible to multiplex and record different information into the same position on the recording medium, by changing a recording condition. For example, FIG. 5(a) schematically shows an example of the hologram mark in the case where the center of the 0-order light of the Fourier image is shifted in the V direction or the H direction and recorded. Except this, it is also possible to multiplex and record different information into the same position on the recording medium, by changing the irradiation angle of either the signal light or the reference light. Moreover, it is also possible to multiplex and record the information, by changing the characteristics itself of the signal light by the modulation of the spatial light modulator. In general, the amount of information which can be multiplexed and recorded in the same position of the hologram disc is expressed by an M number, and in the range thereof, the information can be multiplexed and recorded. For example, in the case of a hologram disc with the M number =16, 16 different information can be multiplexed and recorded in the same area.

Moreover, the above-mentioned example shows the case where the axial direction of the Fourier image (i.e. the direction of a straight line formed of the 0-order light and the 1st-order) is 90 degrees to the rotational direction of the disc (i.e. 0 degree to the V direction which is the radial direction of the disc); however, it is possible to shift the axial direction of the Fourier image from the radial direction of the disc and to record the information. FIG. 5(b) shows one example of that, and the direction of an axis 52 of the Fourier image is shifted by an angle α to a radial direction 51 of the disc.

In the case of the disc-shaped recording medium, damage, such as a scratch, caused while a user treats the disc or the like, is caused in the radial direction of the disc in relatively many cases. FIG. 6 (a) schematically shows this situation. Therefore, if there is a scratch 41 in the disc radial direction as shown in FIG. 6(a), all the hologram marks in the same radial direction cannot be read, so that the information in that portion cannot be reproduced. As opposed to this, as shown in FIG. 5(b), if the Fourier image is formed in a direction shifted by the predetermined angle α with respect to the disc radial direction, even if there is a scratch in the disc radial direction, the situation that all the hologram marks in the same radial direction cannot be read does not happen, and it is more likely to restore the data corresponding to the scratched portion, in an error correction method or the like. Therefore, by shifting the axial direction of the Fourier image, it is possible to perform the recording that is highly resistant to the scratch caused in the disc radial direction. Incidentally, in order to shift the axial direction of the Fourier image from the disc radial direction and to record the information, as shown in FIG. 6(b), it is only necessary to rotate the direction of the grating structure 3a of the one-dimensional spatial light modulator 3, only by the angle α, relative to the disc radial direction.

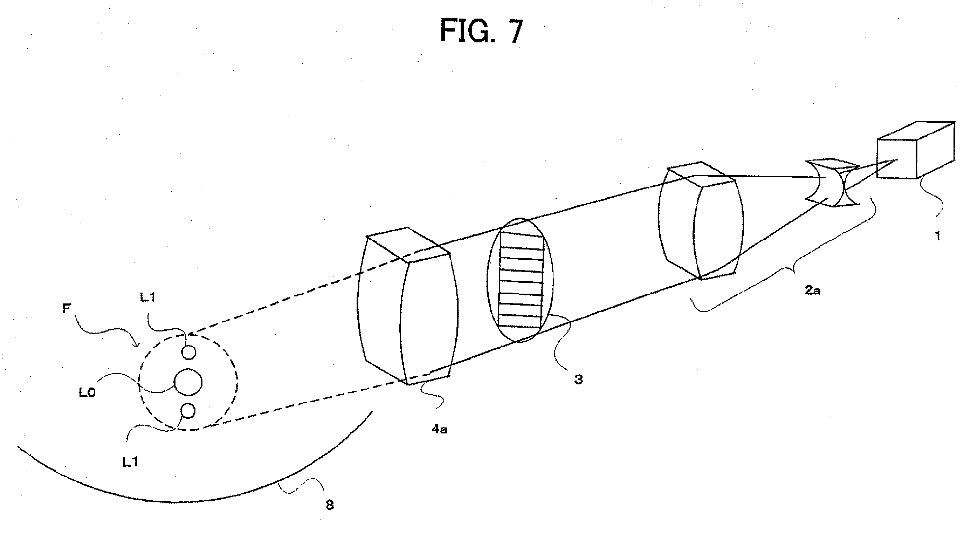

It is also possible to use a cylindrical lens for the expander 2 and the Fourier transform lens 4. FIG. 7 shows the structure of an optical system in that case.

The recording / reproducing apparatus shown in FIG. 1 described above is a so-called transmission type recording / reproducing apparatus, which detects reproduction light on the rear of the disc upon reproduction. The present invention, however, can be applied to a so-called reflection type recording / reproducing apparatus, which performs the irradiation of the recording light and the detection of the reproduction light on one side of the disc.

Moreover, the recording / reproducing apparatus shown in FIG. 1 described above is provided with: an optical system for irradiating the signal light and the reference light, produced by splitting or dividing the laser beam, to the same position on the recording medium, from different directions. However, this can be also applied to a recording / reproducing apparatus of the type that the signal light and the reference light are coaxially irradiated.

As described above, the above-mentioned example and another example is constructed such that it is possible to distinguish the pattern of the reproduction light even if the Fourier image is displaced, relatively to the recording medium, by performing the spatial modulation of the Fourier image only in a direction different from the displacement direction of the recording medium and by recording the information. Thus, it is unnecessary to stop the recording medium upon the recording / reproduction of the information, to thereby improve a random access performance. Moreover, it is possible to increase a recording capacity, by modulating the information by using the mark information even in the displacement direction of the recording medium.

Moreover, in the above-mentioned example, the hologram disc is exemplified as the recording medium. The application of the present invention, however, is not limited to the disc-shaped recording medium, and can be applied to recording medium in various shapes, such as a card-type recording medium.

Next, the recording / reproducing apparatus for the card type recording medium will be discussed, as another example of the present invention. FIG. 8 is a block diagram showing the structural example of the recording / reproducing apparatus for the card type recording medium in another example of the present invention.

In FIG. 8, the basic structure of the recording / reproducing apparatus is the same as in the case of the disc-shaped recording medium shown in FIG. 1. The different point is that there is provided a mechanism of holding and displacing a card-type recording medium 30, instead of the holding and rotating mechanism of the disc 8.

Specifically, as shown in FIG. 8, the card-type recording medium 30 is held on a holder 31. The holder 31 is provided with: an X-direction motor 32 for displacing the card-type recording medium 30 in the X direction thereof (in the horizontal direction of FIG. 8); and a Y-direction motor 33 for displacing the card-type recording medium 30 in the Y direction thereof (in the vertical direction of FIG. 8). The information is recorded and reproduced while the X-direction motor 32 and the Y-direction motor 33 are driven to displace the card-type recording medium 30 in the X direction or in the Y direction. Incidentally, the medium is displaced in the above-mentioned explanation, however, the optical system may be displaced.

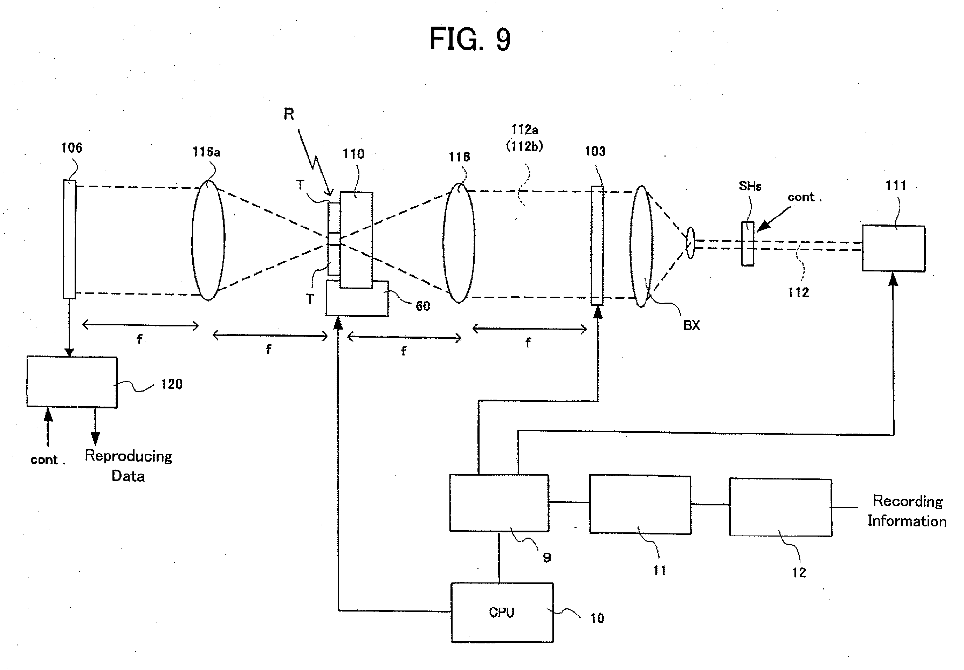

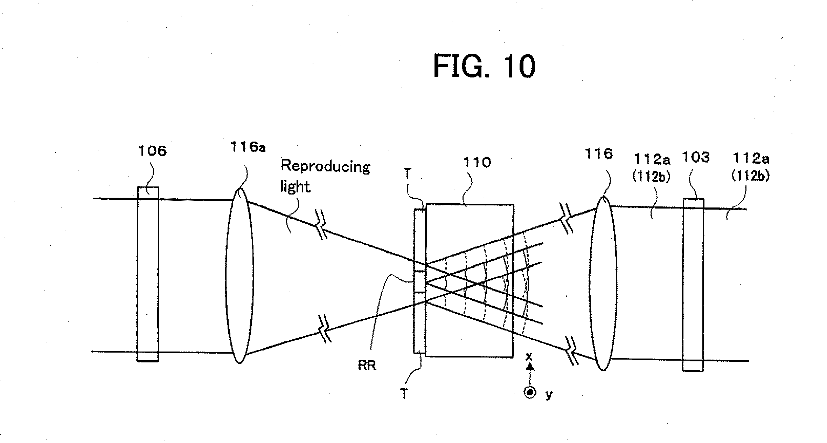

Next, the recording / reproducing apparatus which uses self-coupling will be explained as another example of the present invention, with reference to FIG. 9 and FIG. 10. Here, the "self-coupling" in the example is the following recording / reproducing technology; namely, the signal light and the reference light are not separated or split, only the signal light is entered to the spatial light modulator, the 0-order light which does not include a phase component and which mainly includes a brightness component is used as the reference light, and this 0-order light and higher-order light which mainly includes a brightness component are used to record the interference pattern. FIG. 9 is a block diagram showing the structural example of the recording /reproducing apparatus which uses the self-coupling in another example of the present invention.

Namely, in the above-mentioned example, the laser beam from the laser light source is split to produce the signal light and the reference light. However, the present invention can be also applied to the case where the 0-order light and the higher-order light are allowed to interfere with each other, by using the fact that the laser light is not split but transmitted through the spatial light modulator, to produce the 0-order light which mainly has the brightness component and the higher-order light which has the phase component. FIG. 9 shows the structural example of the recording /reproducing apparatus in that case. In this example, the laser light is not split but transmitted through the spatial light modulator, and the interference pattern is generated by the interference between the higher-order light and the 0-order light as being incident light.

In FIG. 9, a shutter SHs, a beam expander BX, the one-dimensional spatial light modulator 103, and a Fourier transform lens 116 are disposed on the optical path of a light beam 112 coming from a laser light source 111. The laser light source 111, the beam expander BX, the one-dimensional spatial light modulator 103, and the Fourier transform lens 116 can be basically constructed in the same manner as respective constitutional elements of the example shown in FIG. 1. Moreover, the shutter SHs is controlled by a not-illustrated controller, and controls the irradiation time length of the laser beam onto the recording medium.

On the other hand, the recording medium 110 is movably held by a movable stage 60. The movable stage 60 is controlled by a not-illustrated controller, and displaces the recording medium 110 upon the recording and reproduction of the information.

The beam expander BX expands the diameter of the light beam 112 transmitted through the shutter SHs to produce parallel light, and enters it perpendicularly to the one-dimensional spatial light modulator 103. As in the example shown in FIG. 1, the record information is transmitted to the modulator 9 through the buffer 12 and the formatter 11. The modulator 9 is controlled by a CPU 10, to thereby perform the modulation of the laser light emitted from the laser light source 111 and the modulation of the signal light by the one-dimensional spatial light modulator 103. Signal light 112a transmitted through the one-dimensional spatial light modulator 103 is irradiated by the Fourier transform lens 116 to the recording medium 110.

Next, with reference to FIG. 10, a state of the light beam near the recording medium 110 will be discussed. FIG. 10 is a schematic diagram showing a state of the light beam near the recording medium of the recording / reproducing apparatus which uses self-coupling in another example of the present invention. The recording medium 110 is provided with an incident light processing device R on surfaces on the incident side and the opposite side of the signal light 112a. The incident light processing device R has a function of splitting the light beam into the 0-order light and the higher-order light which enter the recording medium 110 and return one portion of the light to the recording medium 110. Specifically, the incident light processing device R is provided with: a 0-order light reflecting device RR for reflecting only the 0-order light of the signal light 112a to the inside of the recording medium 110; and a device T for defining the range thereof. The 0-order light reflecting device RR reflects the 0-order light of the signal light 112a into the recording medium 110. The interference pattern is formed by the 0-order light, reflected into the recording medium110 by the 0-order light reflecting device RR, and the higher-order light, and recorded into the recording medium 110. By this principle, it is unnecessary to produce the reference light by splitting the light beam from the laser light source, as in the example shown in FIG. 1.

Upon reproduction, as shown in FIG. 10, in the same manner of the case of recording in which only reference light 112b is irradiated, the reference light 112b transmitted through the recording medium 110 is vertically entered to the recording medium 110. If the reference light 112b passes through the recording medium 110, the reproduction light which recreates the recorded interference pattern is obtained on the rear side of the recording medium 110 which is irradiated with the reference light 112b. This reproduction light is inverse Fourier transformed by an inverse Fourier transform lens 116a and led to a light receiving element 106. From the light receiving element 106, an electrical signal corresponding to the reproduction light is supplied to a reproduction processing system 120, and reproduction data is outputted from the reproduction processing system 120.

Moreover, the example is explained by using ± 1st-order light, however, both the plus 1st-order light and the minus 1st-order light have the same characteristics, so that the same effect can be obtained, even with only one 1st-order light.

### (First example of an optically relative positional relationship in reality in the recording / reproducing apparatus)

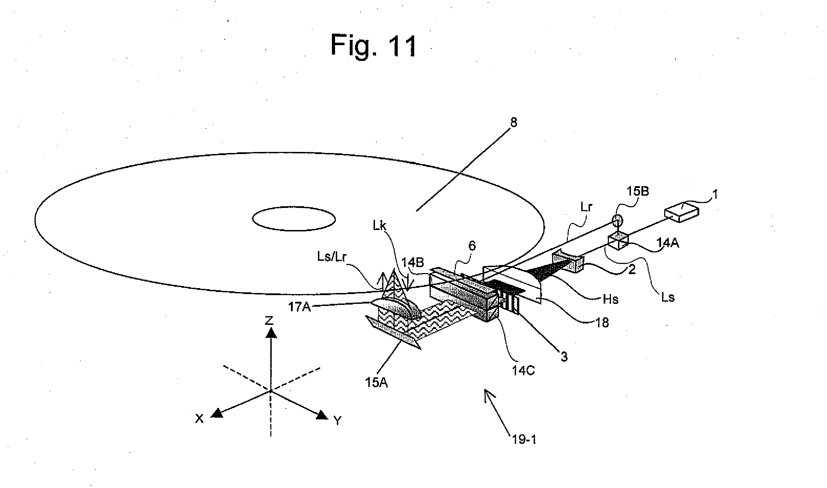

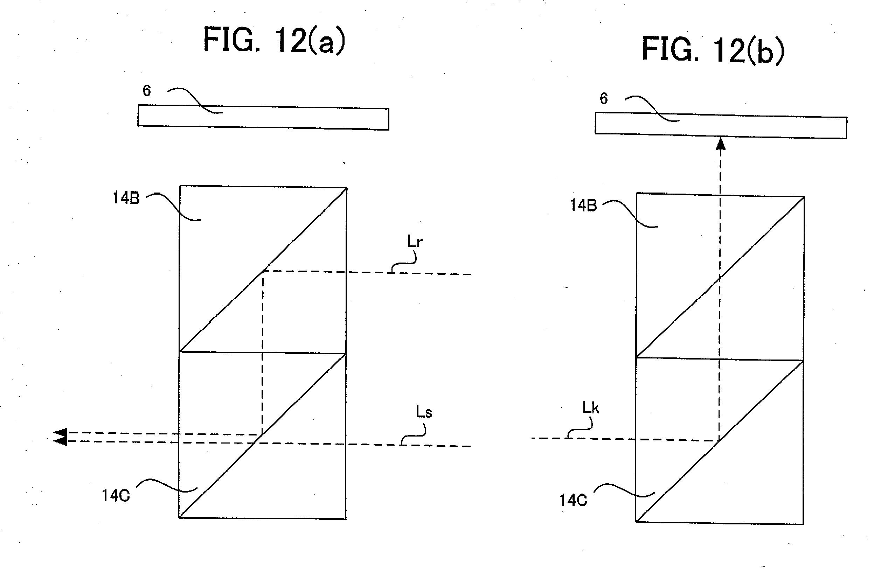

Next, a detailed explanation will be given to an optically relative positional relationship in reality between constitutional elements within the optical system of the recording / reproducing apparatus in the first example of the present invention and the disc, with reference to FIG. 11 and FIGs. 12.

FIG. 11 is a perspective view in appearance showing an optically relative positional relationship in reality between constitutional elements within the optical system of the recording / reproducing apparatus in the first example of the present invention and the disc. FIG. 12(a) is a cross sectional view showing the optical paths of the signal light and the reference light in a half mirror upon recording, and FIG. 12(b) is a cross sectional view showing the optical path of diffracted light in the half mirror upon reproduction, in the first example of the present invention.

In FIG. 11, an X axis direction is parallel to a disc plane, and it is the traveling direction of the laser beam emitted from the laser light source 1. A Y axis direction is perpendicular to the X axis direction, and it forms a plane which is parallel to the disc plane, together with the X axis direction. A Z axis direction is perpendicular to the disc plane.

Incidentally, the reflection type recording / reproducing apparatus in the first example is one specific example of the recording / reproducing apparatus of the present invention.

As shown in FIG. 11, the recording / reproducing apparatus is broadly provided with: the disc 8; and an optical system 19-1. More specifically, the optical system 19-1 is provided with: the laser light source 1; half mirrors 14A, 14B, and 14C; the expander 2; a collimator lens 18; the one-dimensional spatial light modulator 3; reflecting mirrors 15A and 15B; an objective lens 17A; and the light receiving element 6.

The various optical components are accommodated or included in a not-illustrated case or housing of the optical system 19-1, as shown in FIG. 11. The optical system 19-1 is carriage-driven or the like by a not-illustrated carriage motor, by which it is displaced in a direction crossing the track of the disc 8, i.e. in the radial direction, relative to the disc 8 shown in FIG. 11. The optical system 19-1 is constructed to be focus-driven, tracking-driven, or the like by a not-illustrated actuator, to thereby adjust a focus position, a tracking position, or the like of the light beam irradiated onto the disc track. Moreover, as described later, in order to change the irradiation angle of the signal light or the like with respect to the disc 8 and to realize the recording by angle multiplexing, it may be constructed such that the entire optical system 19-1 is slightly inclined to the plane of the disc 8.

Next, with reference to FIG. 11 and FIGs. 12, the operation of each optical component in the first example will be discussed.

At first, the operation upon the recording of the information will be explained.

Upon the recording of the information, the laser beam emitted in the X axis direction from the laser light source 1 is split into two series by the half mirror 14A. Namely, one laser beam is the signal light Ls which is subsequently modulated by the one-dimensional spatial light modulator 3, and the other laser beam is the reference light Lr which is combined with the signal light Ls, in order to record the interference pattern onto the disc 8. In other words, the half mirror 14A serves as a splitting or dividing optical system for splitting the emitted laser beam into the signal light Ls and the reference light Lr. The signal light Ls transmitted through the half mirror 14A in the X axis direction is emitted to the expander 2. The signal light Ls transmitted through the expander 2 is converted from the prism-like laser beam to the lamellate or plate-like laser beam, and its width is expanded. Namely, it is converted to the "plate-like laser beam" of the present invention. In other words, the expander 2 serves as a converting optical system for converting the laser beam emitted from the laser light source 1, to the plate-like laser beam in which the cross section of light flux extends linearly. Hereinafter, the plane defined by the signal light Ls is referred to as a "signal light plane Hs", as occasion demands. Particularly in the present invention, the optical system is disposed such that the signal light plane Hs is located along the plane of the disc 8; for example, such that the signal light plane Hs is located in parallel with the plane (recording surface) of the disc 8. This plate-like signal light Ls is entered to the collimator lens 18 and converted from the plate-like diffused light to the plate-like parallel light. This signal light Ls which has been converted to the parallel light is one-dimensional spatial-modulated by the one-dimensional spatial light modulator 3. The one-dimensional spatial light modulator 3 serves as a one-dimensional spatial modulating device for performing one-dimensional spatial modulation in a direction extending linearly (e.g. in a direction extending based on a shape of a straight line) with respect to the plate-like laser beam.

On the other hand, the reference light Lr emitted in the Z axis direction by the half mirror 14A is reflected by the reflecting mirror 15B in the X axis direction, and is entered to the half mirror 14B disposed below the light receiving element 6 (hereinafter refer to FIG. 12(a)). The reference light Lr is reflected by the half mirror 14B toward the half mirror 14C disposed in the minus Z axis direction. Moreover, the reference light Lr is reflected by the half mirror 14C in the X axis direction.

The signal light Ls modulated by the one-dimensional spatial light modulator 3 and the above-mentioned reference light Lr are combined on the half mirror 14C to the same optical path, and are entered to the reflecting mirror 15A in the X axis direction (refer to FIG. 12(a)). The combined signal light Ls and reference light Lr are reflected perpendicular to the plane of the disc 8, i.e. in the Z axis direction, and are entered to the objective lens 17A of a cylindrical lens type. Namely, the reflecting mirror 15A serves as a mirror device for changing the plate-like laser beam to travel in a direction crossing the recording surface. The combined signal light Ls and reference light Lr are transmitted through the objective lens 17A, by which they are focused or converged, and irradiated to the disc 8. This is how the interference pattern, i.e. the Fourier image, is recorded in a photosensitive material, such as a hologram medium, within the disc 8. Namely, the half mirrors 14A to 14C, the reflecting mirror 15A, and the objective lens 17A serve as the recording optical system for irradiating the recording surface with the reference light based on the laser beam emitted from the laser light source, while irradiating the recording surface with the spatial modulated plate-like laser beam as the signal light.

Next, the operation upon the reproduction of the information will be discussed.

Upon the reproduction of the information, at first, the one-dimensional spatial light modulator 3 is used as a shutter to shield or block the signal light Ls in order not to transmit it. Then, only the reference light Lr with the same characteristics as in the recording, specifically, with the same wavelength, amplitude, or light intensity or the like, is irradiated to the disc 8 in the Z axis direction, on the same optical path as in the recording. The irradiated reference light Lr is diffracted by the interference pattern recorded within the disc 8, to thereby produce diffracted light (reproduction light) Lk. The diffracted light Lk is reflected by the reflective layer or the like within the disc 8, for example, and passes through the same optical path as the approach route. Specifically, the diffracted light Lk is transmitted through the objective lens 17A, and is reflected by the reflecting mirror 15A in the minus X axis direction. Then, it is reflected by the half mirror 14C in the Z axis direction, and is transmitted through the half mirror 14B, and thus it is entered to the light receiving element 6 (refer to FIG. 12(b)). In this manner, a reproduction signal is obtained on the light receiving element 6, and this reproduction signal is supplied to the reproduction processing system.

As described above, in the first example, it is possible to change the prism-like laser beam to be plate-like, by using the one-dimensional spatial light modulator instead of the two-dimensional spatial light modulator. Moreover, the optical system is disposed so as to maintain the positional relationship that the plate-like laser beam which expands in the optical system 19-1, i.e. the signal light plane Hs, faces the plane of the disc 8 in a parallel relationship, for example. As a result, it is possible to further miniaturize and thin the entire information recording / reproducing apparatus, including the both the space which accommodates the disc 8 and the optical system 19-1.

Incidentally, in the first example, the reference light Lr passes through the upper part of the constitutional element, such as the one-dimensional spatial light modulator 3. This space is in a range of the thickness of the objective lens 17A, and an upper side space in which the objective lens 17A is not located in the optical system 19-1 is used, so that it is possible to realize the simplification, miniaturization and thinning of the entire optical system 19-1.

### (Second example of the optically relative positional relationship in reality in the recording / reproducing apparatus)

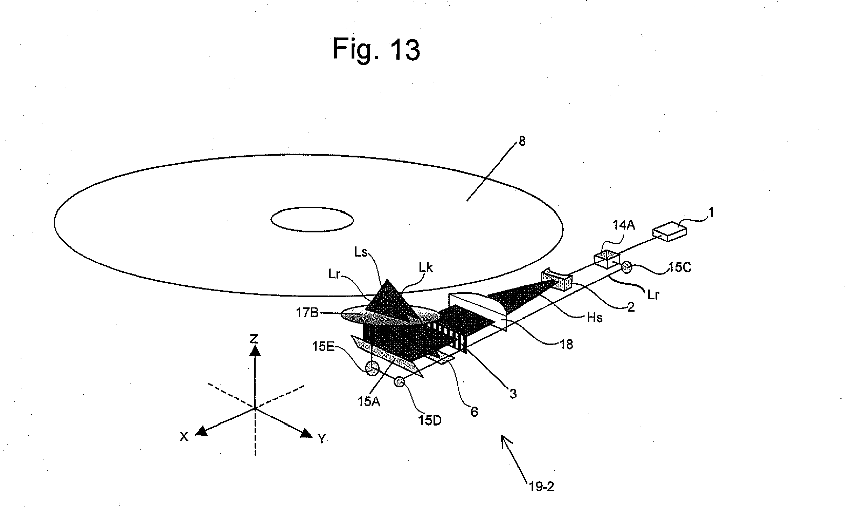

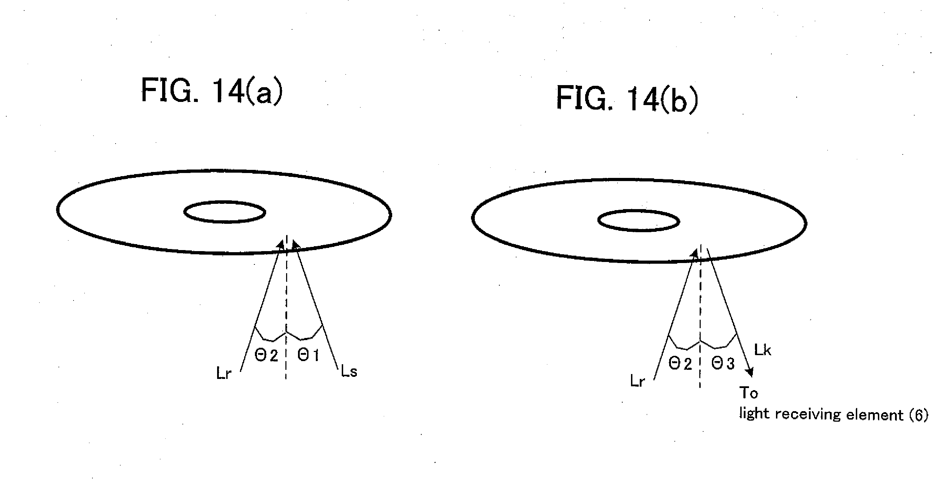

Next, a detailed explanation will be given to an optically relative positional relationship in reality between constitutional elements within the optical system of the recording / reproducing apparatus in the second example of the present invention and the disc, with reference to FIG. 13 and FIGs. 14.

FIG. 13 is a perspective view in appearance showing the optically relative positional relationship in reality between constitutional elements, etc. within the optical system of the recording / reproducing apparatus in the second example of the present invention and the disc. FIGS. 14 are a schematic perspective view in appearance (FIG. 14(a)) showing the signal light and the reference light emitted or irradiated onto the recording medium upon recording and a schematic perspective view in appearance (FIG. 14(b)) showing the reference light emitted or irradiated onto the recording medium upon reproduction and the diffracted light reflected from the recording medium.

Incidentally, in explaining the second example with reference to FIG. 13, the explanation about the same constitutional elements and the same operation as those in the first example is omitted, as occasion demands. Moreover, in FIG. 13, the X axis, the Y axis, and the Z axis are the same as those in the first example shown in FIG. 11.

As shown in FIG. 13, the recording / reproducing apparatus in the second example is provided with: the disc 8; and an optical system 19-2, as in the first example. Then, the optical system 19-2 is provided with: the laser light source 1; the half mirror 14A; the expander 2; the collimator lens 18; the one-dimensional spatial light modulator 3; the reflecting mirror 15A; and the light receiving element 6. As new constitutional elements, the optical system 19-2 is provided with: reflecting mirrors 15C, 15D, and 15E; and an objective lens 17B with a large diameter.

Next, with reference to FIG. 13 and FIGs. 14, the operation of each optical component in the second example will be discussed.

Upon the recording of the information, the laser beam emitted in the X axis direction from the laser light source 1 is split into two series of the signal light Ls and the reference light Lr by the half mirror 14A, as in the first example.

At first, the optical path of the signal light Ls transmitted through the half mirror 14Ain the X axis direction is the same as that in the first example, except that the signal light Ls is not transmitted through the half mirror 14C and is transmitted through not the objective lens 17A which is a cylindrical lens but the simple objective lens 17B. Particularly in the present invention, the optical system is disposed so as to maintain the positional relationship that the signal light plane Hs faces the plane of the disc 8 in a parallel relationship, for example.

On the other hand, the reference light Lr emitted by the half mirror 14A in the Y axis direction is reflected by the reflecting mirror 15C in the X axis direction and is entered to the reflecting mirror 15D. The reference light Lr is reflected by the reflecting mirror 15D in the minus Y axis direction, and is entered to the reflecting mirror 15E. The reference light Lr is reflected by the reflecting mirror 15E toward the objective lens 17B disposed in the Z axis direction, and is transmitted through the objective lens 17B.

Consequently, the signal light Ls modulated by the one-dimensional spatial light modulator 3 is transmitted through one area of the objective lens 17B, and is irradiated to the disc 8 at an irradiation angle Θ1 from the normal of the disc 8, i.e. from the minus Z axis direction. The reference light Lr is also transmitted through another area of the objective lens 17B through the plurality of reflecting mirrors 15C, 15D, and 15E, as described above, and is irradiated to the disc 8 at an irradiation angle Θ 2 from the normal of the disc 8. As described above, the signal light Ls and the reference light Lr are transmitted through the different axes, i.e. the different optical paths, of the same objective lens 17B, and separately focused or converged, and simultaneously irradiated to the same position on the disc 8. By this, the signal light Ls and the reference light Lr interfere with each other on the disc 8, to thereby generate the interference pattern having a grating vector with the irradiation angles Θ1 and Θ2 and wavelength λ of the signal light Ls and the reference light Lr as parameters. The interference pattern is recorded into the hologram medium within the disc 8 as the Fourier image.

Upon the reproduction of the information, the one-dimensional spatial light modulator 3 is used as a shutter to shield or block the signal light Ls in order not to transmit it. Then, only the reference light Lr with the same characteristics as in the recording, specifically, with the same wavelength, amplitude, or light intensity or the like, is irradiated to the disc 8 on the same optical path as in the recording. The irradiated reference light Lr is diffracted by the interference pattern having the grating vector which is recorded within the disc 8, to thereby produce the diffracted light (reproduction light) Lk. The diffracted light Lk is emitted from the disc 8 at a diffracted light emitting angle Θ3 which is uniquely determined from the grating vector. The diffracted light Lk is transmitted through the objective lens 17B, and is entered to the light receiving element 6. In this manner, a reproduction signal is obtained on the light receiving element 6, and this reproduction signal is supplied to the reproduction processing system.

As described above, in the second example, as opposed to the first example, it is possible to simplify the constitutional elements of the optical system 19-2, by using not the cylindrical lens but a simple lens which does not need a high performance, for the objective lens 17B. Then, the signal light Ls and the reference light Lr are not combined on the half mirror but transmitted through the different areas of the objective lens 17B, and combined on the plane of the disc 8. This is how the interference pattern, i.e. the Fourier image, is recorded in a photosensitive material, such as a hologram medium, within the disc 8.

Moreover, in the second example, as in the first example, it is possible to change the prism-like laser beam to be plate-like, by using the one-dimensional spatial light modulator. Moreover, the optical system is disposed so as to maintain the positional relationship that the signal light plane Hs faces the plane of the disc 8 in a parallel relationship, for example. Thus, it is possible to further miniaturize and thin the entire optical system 19-2.

Moreover, in the second example, the reference light Lr is transmitted such that optical path of the reference light Lr and constitutional elements (e.g. the one-dimensional spatial light modulator 3 and so on) are located side by side. As a result of this, it is possible to miniaturize and thin the entire optical system 19-2.

### (Third example of the optically relative positional relationship in reality in the recording / reproducing apparatus)

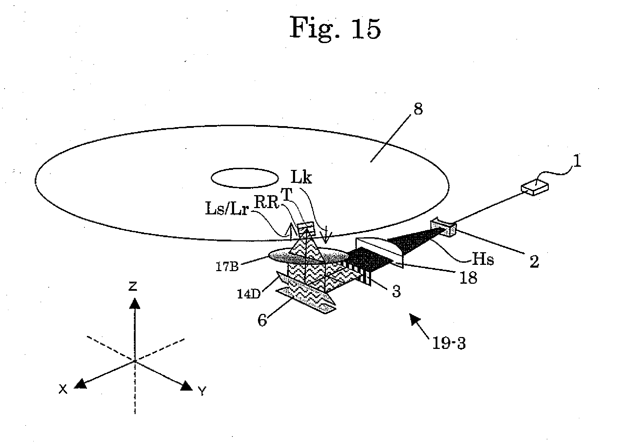

Next, a detailed explanation will be given to an optically relative positional relationship in reality between constitutional elements within the optical system of the recording / reproducing apparatus in the third example of the present invention and the disc, with reference to FIG. 15.

FIG. 15 is a perspective view in appearance showing the optically relative positional relationship in reality between constitutional elements etc. within the optical system of the recording / reproducing apparatus in the third example of the present invention and the disc.

Incidentally, in explaining the third example with reference to FIG. 15, the explanation about the same constitutional elements and the same operation as those in the first and second examples is omitted, as occasion demands. Moreover, in FIG. 15, the X axis, the Y axis, and the Z axis are the same as those in the first and second examples shown in FIG. 11 and FIG. 13.

As shown in FIG. 15, the recording / reproducing apparatus in the third example is provided with: the disc 8; and an optical system 19-3, as in the first and second examples. Then, the optical system 19-3 is provided with: the laser light source 1; the expander 2; the collimator lens 18; the one-dimensional spatial light modulator 3; the objective lens 17B; and the light receiving element 6. As a new constitutional element, the optical system 19-3 is provided with: a half mirror 14D. In particular, in the third example related to the self-coupling, the disc 8 is provided with: the incident light processing device R, which is constructed from the 0-order light reflecting device RR; and the higher-order light transmitting portion T.

Upon the recording of the information, the laser beam emitted in the X axis direction from the laser light source 1 is the signal light Ls which is subsequently modulated by the one-dimensional spatial light modulator 3. The signal light Ls is emitted toward the expander 2, and the signal light Ls transmitted through the expander 2 is converted from the prism-like laser beam to the laser beam having the signal light plane Hs. This plate-like signal light Ls is entered to the collimator lens and converted from the diffused light to the parallel light. This signal light Ls which has been converted to the parallel light is modulated by the one-dimensional spatial light modulator 3. The signal light Ls is focused by passing through the objective lens 17B, and is irradiated to the disc 8. In the example, the incident light processing device R is located on the opposite side to a side where the disc 8 is irradiated. The incident light processing device R has a function of splitting the signal light Ls irradiated to the disc 8, into the 0-order light and the higher-order light, and returning one portion of light to the inside of the disc 8. Specifically, the incident light processing device R is provided with: the 0-order light reflecting device RR for reflecting only the 0-order light of the signal light Ls to the inside of the disc 8; and the higher-order light transmitting portion T for defining the range thereof and transmitting the higher-order light. The 0-order light reflecting device RR reflects the 0-order light of the signal light Ls to the inside of the disc 8. The 0-order light, reflected by the 0-order light reflecting device RR to the inside of the disc 8, and the irradiated higher-order light interfere with each other, and thus, the interference pattern, i.e. the Fourier image, is recorded in a photosensitive material, such as a hologram medium, within the disc 8. By the principle of this self-coupling, it is unnecessary to split the laser beam from the laser light source to thereby produce the reference light, as in the first and second examples explained with reference to FIG. 11 and FIGs. 12.

In particular, with respect to an aspect of the self-coupling, in addition to the aspect of the example in which the 0-order light is reflected and the higher-order light is transmitted, it may be an aspect in which the 0-order light is transmitted, absorbed, scattered, or polarized, and the higher-order light is reflected.

Upon the reproduction of the information, the one-dimensional spatial light modulator 3 is used as a fully opened shutter not to shield or block the reference light Lr, so the reference light Lr emitted in the X axis direction from the laser light source 1 is not modulated by the one-dimensional spatial light modulator 3. Then, only the reference light Lr with the same characteristics as in the recording, specifically, with the same wavelength, amplitude, or light intensity or the like, is irradiated to the disc 8 on the same optical path as in the recording. The irradiated reference light Lr is diffracted by the interference pattern having the grating vector which is recorded within the disc 8, to thereby produce the diffracted light (reproduction light) Lk. The diffracted light Lk is reflected by the reflective layer or the like within the disc 8, for example, and passes through the same optical path as the approach route. Specifically, the diffracted light Lk is transmitted through the objective lens 17B, is reflected by the half mirror 14D in the minus Z axis direction, and is entered to the light receiving element 6. In this manner, a reproduction signal is obtained on the light receiving element 6, and this reproduction signal is supplied to the reproduction processing system.

As described above, in the third example, as in the first and second examples, it is possible to change the prism-like laser beam to be plate-like, by using the one-dimensional spatial light modulator. Moreover, the optical system is disposed so as to maintain the positional relationship that the signal light plane Hs faces the plane of the disc 8 in a parallel relationship, for example. Thus, it is possible to further miniaturize and thin the entire optical system 19-3.

Moreover, the self-coupling is used in the third example, so that the optical path splitting or dividing element, such as the half mirror, is not required, which allows less optical components or the like. Thus, it is possible to simplify, miniaturize, and thin the entire optical system 19-3.

### (Fourth example of the optically relative positional relationship in reality in the recording / reproducing apparatus)

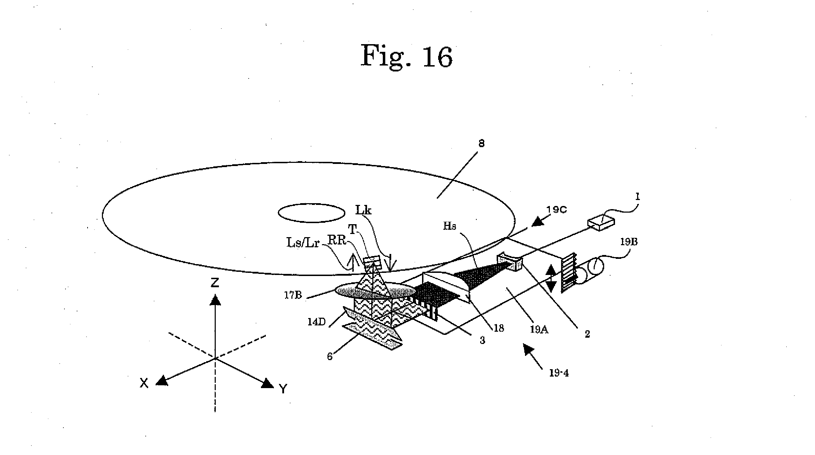

Next, a detailed explanation will be given to an optically relative positional relationship in reality between constitutional elements within the optical system of the recording / reproducing apparatus in the fourth example of the present invention and the disc, with reference to FIG. 16, wherein the one-dimensional spatial light modulator is used by the self-coupling and angle multiplexing.

FIG. 16 is a perspective view in appearance showing the optically relative positional relationship in reality between constitutional elements etc. within the optical system of the recording / reproducing apparatus in the fourth example of the present invention and the disc.

Incidentally, in explaining the fourth example with reference to FIG. 16, the explanation about the same constitutional elements and the same operation as those in the third example is omitted, as occasion demands. Moreover, in FIG. 16, the X axis, the Y axis, and the Z axis are the same as those in the third example shown in FIG. 15.

In the fourth example, the third example is further developed to realize the recording by the "angle multiplexing". Here, the angle multiplexing in the example is a technology of (i) multiplexing and recording the different record information into the same area and (ii) reproducing them, by relatively changing the irradiation angles of the reference light and the signal light with respect to the surface of the hologram recording medium.

In the fourth example, in order to realize the angle multiplexing, as new constitutional elements added to the constitutional elements in the third example, there are provided with: an optical system board 19A; and a motor 19B. On the top surface of the optical system board 19A, there are provided the expander 2, the collimator lens 18, and the one-dimensional spatial light modulator 3, which constitute an optical system 19-4. One side of the optical system board 19A is a spindle 19C parallel to the X axis. If the motor 19B is driven, the optical system board 19A and the signal light plane Hs which expands in the optical system 19-4 can be inclined by 1 degree or less, such as several tenth of a degree, with respect to the disc plane. Thus, it is possible to change the irradiation angle of the signal light Ls or the reference light Lr with respect to the plane of the disc 8, to thereby realize the recording by the angle multiplexing. Incidentally, the change in the irradiation angle necessary to realize the angle multiplexing is determined from the thickness of the disc 8. For example, by changing the irradiation angle stepwise by several tenth of a degree, it is possible to repeatedly record many pieces of record information, such as a dozen to several tens, into the same point on the recording surface.

The operations upon the recording and the reproduction in the fourth example are the same as in the third example.

Particularly, even in the fourth example, the positional relationship that the signal light plane Hs faces the disc plane is maintained.

Incidentally, the "irradiation angle changing device" of the present invention may relatively change the irradiation angle of the signal light Ls or the reference light Lr with respect to the disc plane. For example, the irradiation angle changing device may be constructed to change the angle and the arrangement with respect to the optical path on the laser light source 1, the half mirror 14A, the expander 2, the collimator 18, and the one-dimensional spatial light modulator 3, which constitute the optical system 19-4. Alternatively, an optical element exclusive for changing the irradiating angel of the signal light Ls or the reference light Lr may be additionally provided for the optical system. Alternatively, in place of or in addition to this, it may be constructed to mechanically change the holding angle of the disc 8. Moreover, in addition to the angle multiplexing in the radial direction, the angle multiplexing in another direction, such as the normal direction, can be also performed.

As described above, in the fourth example, as in the first, second, and third examples, it is possible to change the prism-like laser beam to be plate-like, by using the one-dimensional spatial light modulator. Moreover, the optical system is disposed so as to maintain the positional relationship that the signal light plane Hs faces the plane of the disc 8 in a parallel relationship, for example. Thus, it is possible to further miniaturize and thin the entire optical system 19-4.

Moreover, the self coupling is used in the fourth example, so that the optical path splitting or dividing element, such as the half mirror, is not required, which allows less optical components or the like. Thus, it is possible to simplify, miniaturize, and thin the entire optical system 19-4.

In the present invention, various changes may be made, if desired, without departing from the essence or spirit of the invention which can be read from the claims and the entire specification. The information recording apparatus and the information recording / reproducing apparatus of a hologram type, all of which involves such changes, are also intended to be within the technical scope of the present invention.

### Industrial Applicability

The information recording apparatus and the information recording /reproducing apparatus of the present invention can be applied to an information recording apparatus and an information recording / reproducing apparatus which use a hologram.

### Brief Description of Drawings

[FIG. 1] FIG. 1 is a schematic block diagram showing the structure of a hologram disc recording / reproducing apparatus in an example of the present invention.
[FIG. 2] FIG. 2 is a conceptual view schematically showing a situation in which signal light is emitted or irradiated onto a disc from the recording /reproducing apparatus in the example of the present invention.
[FIG. 3] FIG. 3 is an enlarged view schematically showing one specific example of a Fourier image formed on the disc in the example of the present invention.
[FIG. 4] FIG. 4 is a schematic diagram showing one structural example of a light receiving element or photo-detector in the example of the present invention.
[FIGs. 5] FIGs. 5 are schematic diagrams showing one specific example of a hologram mark in another example of the present invention.
[FIGs. 6] FIGs. 6 are plan views schematically showing a scratch or damage in the radial direction of the hologram mark in another example of the present invention and a relative positional relationship between the disc and a one-dimensional spatial light modulator 3.
[FIG. 7] FIG. 7 is a schematic diagram showing a situation in which the signal light is emitted or irradiated onto the disc in the case where a cylindrical lens is used for an expander and a Fourier transform lens, from the recording / reproducing apparatus in another example of the present invention.
[FIG. 8] FIG. 8 is a block diagram showing the structural example of the recording / reproducing apparatus with respect to a card type recording medium in another example of the present invention.
[FIG. 9] FIG. 9 is a block diagram showing the structural example of the recording / reproducing apparatus which uses self coupling in another example of the present invention.
[FIG. 10] FIG. 10 is a schematic diagram showing a state of a light beam near the recording medium of the recording / reproducing apparatus which uses self-coupling in another example of the present invention.
[FIG. 11] FIG. 11 is a perspective view in appearance showing an optically relative positional relationship in reality between constitutional elements within the optical system of the recording / reproducing apparatus in the first example of the present invention and the disc.
[FIGs. 12] FIGs. 12 are a cross sectional view (FIG. 12(a)) showing the optical paths of the signal light and the reference light in a half mirror upon recording and a cross sectional view (FIG. 12(b)) showing the optical path of diffracted light in the half mirror upon reproduction, in the first example of the present invention.
[FIG. 13] FIG. 13 is a perspective view in appearance showing an optically relative positional relationship in reality between constitutional elements, etc. within the optical system of the recording / reproducing apparatus in a second example of the present invention and the disc.
[FIGs. 14] FIGs. 14 are a schematic perspective view in appearance (FIG. 14(a)) showing the signal light and the reference light emitted or irradiated onto the recording medium upon recording and a schematic perspective view in appearance (FIG. 14(b)) showing the reference light emitted or irradiated onto the recording medium upon reproduction and the diffracted light reflected from the recording medium.
[FIG. 15] FIG. 15 is a perspective view in appearance showing an optically relative positional relationship in reality between constitutional elements etc. within the optical system of the recording / reproducing apparatus in a third example of the present invention and the disc.
[FIG. 16] FIG. 16 is a perspective view in appearance showing an optically relative positional relationship in reality between constitutional elements etc. within the optical system of the recording / reproducing apparatus in a fourth example of the present invention and the disc.

### Description of Reference Codes

- 1: Laser light source
- 2: Expander
- 2a: Cylindrical lens
- 3: One-dimensional spatial laser modulator
- 6: Light receiving element
- 8: Hologram disc
- 14: (14A, 14B, 14C, 14D) Half mirror
- 15: (15A, 15B, 15C, 15D) Reflecting lens
- 16: Condensing lens
- 17A: Objective lens
- 17B: Objective lens
- 19-1: to 19-4 Optical system
- 19A: Optical system board
- BX: Beam expander
- Ls: Signal light
- Lr: Reference light
- Lk: Diffracted light
- Hs: Signal light plane

## Claims

1. An information recording apparatus for recording record information onto a recording medium having an optically recordable recording surface, comprising:
a laser light source;
a converting optical system for converting a laser beam emitted from said laser light source to a plate-like laser beam whose cross section extends linearly and for emitting the laser beam such that a direction extending linearly is along the recording surface;
a one-dimensional spatial modulating device for performing one-dimensional spatial modulation in the direction extending linearly with respect to the plate-like laser beam, on the basis of the record information;
a recording optical system for recording the record information onto the recording medium, by irradiating the recording surface with reference light based on the laser beam emitted from said laser light source while irradiating the recording surface with the spatial modulated plate-like laser beam as signal light; and
a displacing device for displacing the recoding medium relative to said recording optical system such that irradiation positions of the signal light and the reference light are relatively displaced on the recording surface.

2. The information recording apparatus according to claim 1, wherein said recording optical system includes:
a splitting optical system for splitting the laser beam emitted from said laser light source into the signal light and the reference light in a previous step of said converting optical system; and
a combining optical system for combining the one-dimensional spatial modulated signal light and the reference light to a same optical path, in a subsequent step of said one-dimensional spatial modulating device.

3. The information recording apparatus according to claim 2, wherein said splitting optical system splits the reference light such that the optical path of the reference light and the plate-like laser beam are located side-by-side as viewed from the recording surface.

4. The information recording apparatus according to claim 1, wherein
said recording optical system further comprises a splitting optical system for splitting the laser beam emitted from said laser light source into the signal light and the reference light in a previous step of said converting optical system, and
the one-dimensional spatial modulated signal light and the reference light are combined to a same optical path and irradiated to the recording surface.

5. The information recording apparatus according to claim 4, wherein said splitting optical system splits the reference light such that the optical path of the reference light and the plate-like laser beam are located side-by-side as viewed from the recording surface.

6. The information recording apparatus according to claim 1, wherein the reference light is emitted from said laser light source, together with the signal light, and irradiated to the recording surface through said converting optical system, said one-dimensional spatial modulating device, and said recording optical system.

7. The information recording apparatus according to claim 1, further comprising an irradiation angle changing device capable of relatively changing irradiation angles of the signal light and the reference light with respect to the recording surface.

8. The information recording apparatus according to claim 1, wherein at least one portion of said laser light source, said converting optical system, said one-dimensional spatial modulating device, and said recording optical system disposed in a same plane located along the recording surface.

9. The information recording apparatus according to claim 1, wherein said recording optical system includes a mirror device for changing the one-dimensional spatial modulated plate-like laser beam which travels along the recording surface, to travel in a direction crossing the recording surface.

10. The information recording apparatus according to claim 1, wherein at least one of said converting optical system, said one-dimensional spatial modulating device, and said recording optical system includes an optical element in which a cross section crossing a traveling direction of the plate-like laser beam is in a longitudinal shape, extending along the recording surface in accordance with a cross section of light flux, which extends linearly, of the plate-like laser beam.

11. An information recording / reproducing apparatus comprising:
the information recording apparatus according to claim 1;
a controlling device for making said one-dimensional spatial modulating device function as a shielding device for shielding the laser beam emitted from said laser light source; and
a reproducing device for detecting interference light produced by transmission, diffraction, or reflection on the recording medium, caused by the reference light irradiated to the recording surface through said recording optical system, and reproducing the record information on the basis of the detected interference light.
